# EUROPEAN PATENT APPLICATION

(11) **EP 2 738 739 A1**
(43) Date of publication of application: **04.06.2014**
(21) Application number: 12820275.1
(22) Date of filing: 25.07.2012
(51) Int. Cl.: G06T 7/00, G06F 17/30

(54) **COMPARISON/SEARCH SYSTEM, COMPARISON/SEARCH SERVER, IMAGE CHARACTERISTIC EXTRACTION DEVICE, COMPARISON/SEARCH METHOD, AND PROGRAM**

(30) Priority: 29.07.2011 JP 2011166790
(71) Applicant: NEC Corporation, Tokyo 108-8001 (JP)
(72) Inventor: ISHIYAMA Rui, Tokyo 108-8001 (JP)
(74) Representative: Vossius & Partner
(86) International application number: PCT/JP2012/068829
(87) International publication number: WO 2013/018615

(57) **Abstract**

The present invention is directed to a collation/retrieval system including a first imaging means capturing, while a predetermined section formed into the same pattern for every product is set to a reference section, an image of a product including at least the reference section; a product feature extraction means detecting from the image captured by the first imaging means the reference section of the product, setting a recessed portion existing at a standard position relative to the detected reference section of the product to a collation area, and thereby extracting an image feature in the collation area of the product; a storage means storing the extracted image feature of the collation area of the product; a second imaging means capturing an image including at least the reference section of a product to be collated; a to-be-collated product feature extraction means detecting from the image captured by the second imaging means the reference section of the product to be collated to extract an image feature of the collation area of the detected reference section; and a collation/retrieval means collating the stored image feature with the image feature of the collation area of the product to be collated.

## Description

### [TECHNICAL FIELD]

The present invention relates to a collation/retrieval system, a collation/retrieval server, an image feature extraction apparatus, a collation/retrieval method, and a program.

### [BACKGROUND ART]

In recent years, commitment to quality of products comes to be stronger among consumers and retailers. However, there was no means for the consumers and the retailers to know whether or not the products arrived at stores are genuine or whether or not the products they received are from authorized agents.

In other words, in the conventional system for distributing products, many middlemen (e.g., several wholesale stores) exist between the producers and consumers. Such conventional system, in which many middlemen exist between the producers and consumers, makes it difficult to provide the consumers accurate information about each individual product (e.g., information about a producing area, a producer name, a kind, a production date, and quality of the each individual product) when the products arrives at the consumers.

Therefore, as the typical product management system, an information acquisition system acquiring individual information of each farm product has been proposed. The system enables easy providing of the individual information of each farm product to, for example, the consumers (e.g., Patent Document 1).

Patent document 1 discloses such a technique in which an ID number as an own identifier for each individual is given to a farm product such as a melon, resulting in allowing a person (e.g., a consumer) other than the farm producer of the melon (e.g., a commercial farm or an agricultural cooperative) to freely acquire individual information about the melon based on the ID number. For the sake of executing the above system, a label (e.g., a seal or a sticker) with the ID number is attached to the farm product.

Further, the individual information about the farm product is accumulated in a computer system of a separately provided independent neutral organization (e.g., a database company) together with the ID number, resulting in assembling a database. The producer transmits the ID number to the computer system as well as transmits the individual information, corresponding to the farm product, including a producing area, a producer name, a kind, a cultivation method, a harvest date, and quality (e.g., sugar content) of the farm product, to the computer system.

At least one computer is provided to each retailer shop and each consumer's home. Each computer is connected to the computer system via the general public line in a mutually communicative manner. The retailer shop or the consumer transmits the ID number on the label attached to the farm product to the computer system from the computer of his own. This enables the retailer shop or the consumer to acquire the individual information about the farm product identified by the ID number.

For controlling agricultural and marine products stocked by a distributor, it is necessary to know information to be identified (e.g., quality information about an arrival date and a harvest date effecting on freshness and a component different according to a process purpose) in the stock control of each stock product. With the information, for example, stock products having elder arrival date are sold by lowering the price prior to stock products of the same kind having newer arrival date. Conventionally, similarly to the above described technique, attachment of the label with the ID number to the farm product allows the computer system to retrieve stock control information based on the ID number.

### [Related Art Documents]

### [Patent Documents]

[Patent Document 1] Japanese Patent No. 3355366

### [SUMMARY OF INVENTION]

### [TECHNICAL PROBLEM]

However, in the method as disclosed in patent document 1 in which an individual is identified by a label (e.g., a seal or a sticker) attached to a product or by a packaging material of the product, if the label (hereinafter the "label" includes a packaging material) is removed maliciously or if the label is copied and/or imitated to be attached to another similar product, it was hard or impossible to prevent a fraud, for example, on a consignor of the product.

Further, when the label could not be attached to the product or when the label was detached from the product, it became impossible to retrieve stock control information of such each individual.

Still further, in the case where the producer or the retailer holds a plurality of products of the same kind, the producer or the retailer needs to provide a serial number for each product and attach a label or a tag capable of reading the serial number to each product in order to retrieve information of each individual for the purpose of management of the consignees and control of the stock adjustment one by one in a separate manner. This requires more cost than a case of using a single piece of label or a printing.

Yet further, in some products, e.g., minute parts and food products, it is impossible to directly write onto the products or attach a label or a tag to the products. Also, in other products, if a unit price is inexpensive, it is a burden to prepare different tags to each individual in view of an economical aspect. As a result, it was impossible to use such a system of patent document 1 in which the label (e.g., the seal or the sticker) is attached to each product. Thus, none of the producers, the distributors, the retailers, or the consumers had a means capable of suitably control each product separately.

In a case of performing acceptance quality sampling in a factory, e.g., in a case of retrieving to which lot does a product belong, it was difficult to provide accurate information about each of the products of the same kind (e.g., to provide information different between products even of the same kind, e.g., information about a time of manufacture, a production worker, and manufacturing process) among a vast amount of products. This makes it difficult to identify and manage the products one by one.

Instead of the attachment of a label, embedding of, for example, an IC tag in the product is proposed as one means. However, this damages the product and therefore lowers a value of commodity in a case of an industrial product such as a leather product or a hard disk. Further, there was such a problem that the use of IC tag made the whole system expensive.

The present invention was made to solve the above described problems. A purpose of the present invention is to provide a collation/retrieval system capable of collating to retrieve information about each individual product without requiring any specific device such as an IC tag, a collation/retrieval server, an image feature extraction apparatus, a collation/retrieval method, and a program.

### [Means for Solving the Problems]

The present invention is directed to a collation/retrieval system including a first imaging means capturing, while a predetermined section formed into the same pattern for every product is set to a reference section, an image of a product including at least the reference section; a product feature extraction means detecting from the image captured by the first imaging means the reference section of the product, setting a recessed portion existing at a standard position relative to the detected reference section of the product to a collation area, and thereby extracting an image feature in the collation area of the product; a storage means storing the extracted image feature of the collation area of the product; a second imaging means capturing an image including at least the reference section of a product to be collated; a to-be-collated product feature extraction means detecting from the image captured by the second imaging means the reference section of the product to be collated and extracting an image feature of the collation area of the detected reference section; and a collation/retrieval means collating the stored image feature with the image feature of the collation area of the product to be collated.

The present invention is directed to a collation/retrieval server collating a product produced by or delivered from a producer or a distributor with a product to be collated for retrieval including a storage means storing, while a predetermined section formed into the same pattern for every product is set to a reference section and a recessed portion existing at a standard position relative to the reference section of the product is set to a collation area, an image feature in the collation area of the product; a to-be-collated product feature extraction means receiving an image of the product to be collated, detecting from the received image the reference section of the product to be collated, and thereby extracting the image feature of the collation area of the reference section; and a collation/retrieval means collating the stored image feature with the image feature of the collation area of the product to be collated.

The present invention is directed to an image feature extraction apparatus including a feature extraction means receiving an image of a product to be collated, detecting from the received image a predetermined section defined in the product as a reference section, and thereby extracting an image feature of a recessed portion, as a collation area, existing at a standard position relative to the detected reference section of the product.

The present invention is directed to a collation/retrieval method including setting a predetermined section formed into the same pattern for every product to a reference section; setting a recessed portion existing at a standard position relative to the reference section to a collation area; and using an image feature in the collation area of the product in collation/retrieval of the product.

The present invention is directed to a program causing a computer to receive an image of a product to be collated; detect from the received image a predetermined section formed into the same pattern for every product as a reference section; and thereby extract an image feature of a recessed portion, as a collation area, existing at a standard position relative to the reference section of the product.

The present invention is directed to a collation/retrieval apparatus collating a product produced by or delivered from a producer or a distributor with a product to be collated for retrieval including a to-be-collated product feature extraction means receiving an image of the product to be collated, detecting from the received image a reference section of the product to be collated, and thereby extracting an image feature of the collation area of the reference section; and a collation/retrieval means collating, while a predetermined section formed into the same pattern for every product is set to a reference section and a recessed portion existing at a standard position relative to the reference section is set to a collation area, an image feature stored in a storage means storing the image feature in the collation area of the product with the image feature of the collation area of the product to be collated.

### [Effects of the Invention]

The present invention is capable of executing, without using any specific device such as an IC tag, collation of a product or retrieval of management information.

### [BRIEF DESCRIPTION OF DRAWINGS]

FIG. 1 is a block diagram according to an embodiment of the present invention.
FIG. 2 illustrates a reference section and a collation area.
FIG. 3 illustrates another reference section and collation area.
FIG. 4 is a block diagram of a management information retrieval system according to the embodiment.
FIG. 5 illustrates a terminal device retrieving management information.

### [DESCRIPTION OF EMBODIMENTS]

Embodiments of the present invention will be described below.

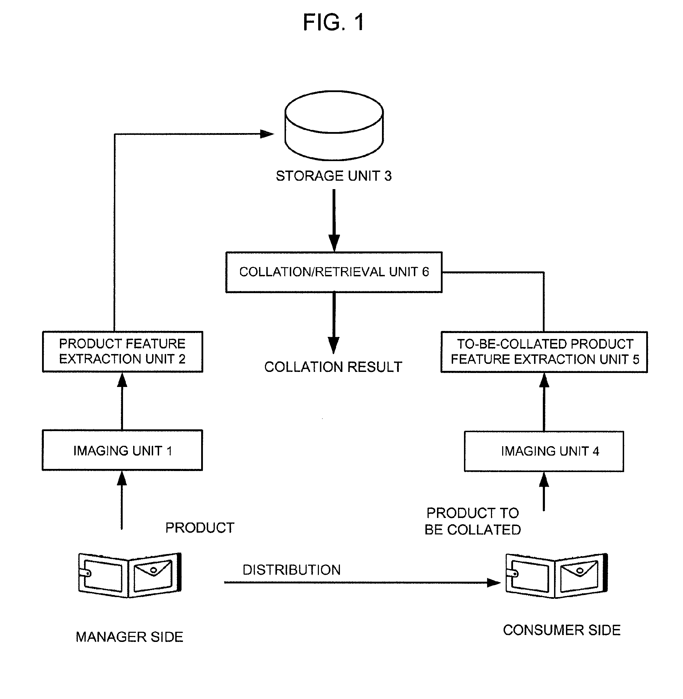

FIG. 1 is a block diagram according to an embodiment of the present invention.

According to an aspect of the present invention, a product collation/retrieval system includes an imaging unit 1 capturing, while a predetermined section defined in a product is set to a reference section, an image of the product including at least the reference section; a product feature extraction unit 2 detecting from the image captured by the imaging unit 1 the reference section of the product and extracting, while a recessed portion existing at a standard position relative to the detected reference section of the product is set to a collation area, an image feature in the collation area of the product; a storage unit 3 storing the extracted image feature of the collation area of the product; an imaging unit 4 capturing an image including at least the reference section of a product to be collated; a to-be-collated product feature extraction unit 5 detecting from the image captured by the imaging unit 4 the reference section of the product to be collated and extracting an image feature of the collation area of the detected reference section; and a collation/retrieval unit 6 collating the stored image feature with the image feature of the collation area of the product to be collated.

In the present invention, while the predetermined section defined in the product is set to the reference section, a portion or a whole of the recessed portion (i.e., the portion lower than the adjacent area) existing at the standard position relative to the reference section is set to the collation area. The present invention is characterized by performing the collation and the retrieval of the product by using a difference of a surface design (i.e., an image pattern) in the collation area of the product.

Here, examples of the predetermined section defined in the product include a trademark, a logotype, a name of manufacturer, a manufacturing company, a brand name, a product name, a product number, and a section marked, branded, pressed, or attached on/to the product. The trademark, the logotype, the name of manufacturer, the manufacturing company, the brand name, the product name, the product number, and the section marked, branded, pressed, or attached on/to the product are set to the reference section. The sections of the products of the same kind commonly have the same pattern and have a characteristic appearance. Therefore, setting of the sections to the reference section advantageously facilitates detection of a position and a posture of the reference section in the image upon collation.

Meanwhile, the reference section is not needed to be changed for each individual. Therefore, a cost can be effectively saved comparing to the conventional means in which a different identifier, e.g., a different management tag, is provided to the each individual.

Further, in the present invention, while a portion or a whole of the recessed portion (i.e., the portion lower than the adjacent area) existing at the standard position relative to the reference section of the product is set to the collation area, collation and retrieval of the product is performed by using the difference of the surface design in the collation area of the product. The recessed portion (i.e., the portion lower than the adjacent area), as the collation area, is more scratch-resistant and stain-resistant than the other portions, i.e., is advantageous in keeping the surface design pattern as it is in the area for the use of collation/retrieval. Meanwhile, examples of the pattern in the area for the use of collation/retrieval include a scratch naturally generated in the course of manufacturing/processing the product, minute unevenness, and the design pattern.

Specifically, the minute unevenness is naturally formed on a surface of a molten metal, resin, or a ceramic part in the course of manufacturing them. Thus formed unevenness pattern differs for each individual. Normally, such unevenness is removed during finishing process such as polishing for functional and aesthetic purposes. However, such finishing process is not provided to the recessed portion in many cases, and thus the pattern remains as it is in the recessed portion. According to the present invention, such a section is specified for the use of identification/retrieval of a target individual. Similarly, a minute unevenness pattern is generated at a change portion of the product during also cutting process and pressing process, which, however, is usually removed during the finishing process. The pattern, however, still remains as it is in the recessed portion in many cases.

The collation area may be defined at a position away from the reference section. Further, if the reference section itself includes the recessed portion as a result of marking process, branding process, or pressing process, a portion or a whole of the reference section can be set to the collation area.

A product to which the present invention is applied should not be construed in a limiting sense insofar as the product includes a surface different for each individual product. Specific examples of the product include a leather product, a metal workpiece, a wood product, molten resin, and an industrial product including a ceramic portion (e.g., a semiconductor chip). Also, examples of the surface pattern of the product include a surface design of the leather product or the wood product and minute unevenness of the molten resin or the ceramic portion.

Next, a structure of each unit will be described below.

The imaging unit 1 belongs to a producer or a distributor (i.e., a production company of an industrial product) or a parson managing distribution and a quality control of products during the course of distribution of the products. By using the imaging unit 1, for example, the producer captures the images of the reference section and the collation area of the product. The imaging unit 1 may be equipped with an additional device for capturing the image of the reference section of the product. Alternatively, it is possible to use a digital camera with a CCD or a CMOS and a collation device. A file format of the captured image may be anything. For example, the file format may be a JPEG.

Meanwhile, the producer includes a person engaged in production (e.g., a production company of an industrial product), and the distributor includes a person engaged in distribution or quality control of products during the distribution of the products (e.g., a wholesaler, a retail shop, and an agent).

The product feature extraction unit 2 detects the reference section from the image captured by the imaging unit 1 and extracts the image feature of the recessed portion (i.e., the portion lower than the adjacent area), as the collation area, existing at the standard position relative to the reference section of the product. Therefore, the product feature extraction unit 2 stores in advance the feature of the reference section of the product and, based on the feature, detects the reference section from the image captured by the imaging unit 1. At the time, the product feature extraction unit 2 normalizes the collation area determined in advance by reference to the reference section based on the position and the posture of the reference section on the image to thereby extract an image feature of the normalized collation area. Extraction of the image feature can be performed by an extraction technique in which, for example, an image feature of a fingerprint is extracted by using a brightness value, a feature point, an inflection point of a line of a binarized image, an intersection point, an end point, and a center point of an image. Thus extracted image feature is stored in the storage unit 3. Meanwhile, the product recorded (i.e., registered) in the recording unit 3 is hereinafter referred to as registered product.

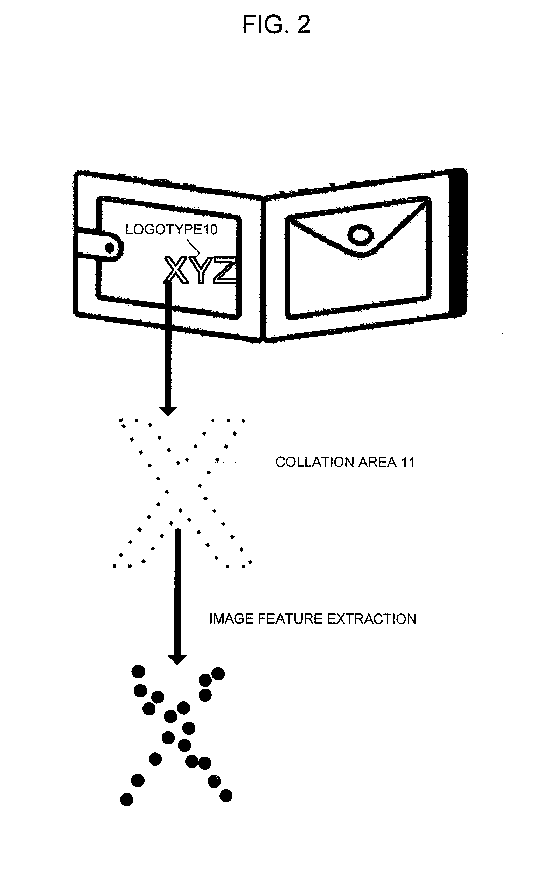

FIG. 2 illustrates an example of the reference section of the product and an example of the collation area thereof. In FIG. 2, a logotype 10, i.e., "XYZ", marked on a wallet is set to the reference section. Under the condition, a portion where "X" of the "XYZ" is marked and thus is formed into a recessed portion (i.e., a portion lower than the adjacent area) is set to the collation area (i.e., an inside portion of a dotted line). More specifically, the recessed portion of the reference section is set to the collation area.

Since normally the same logotye 10 is used, storing of a feature of the logotype 10 as the reference section facilitates identification of a position and a posture of the logotype 10. If the position and the posture of the logotype 10 can be identified by normalization thereof, the position and the posture of the collation area can be specified by normalization. As a result, as illustrated in FIG. 2, it is possible to extract an image feature of the surface design of the wallet as the collation area.

Meanwhile, this is a mere example and should not be construed in a limiting sense. For example, the recessed portion (i.e., the portion lower than the adjacent area) of all the letters "XYZ" of the logotype 10 can be set to the collation area.

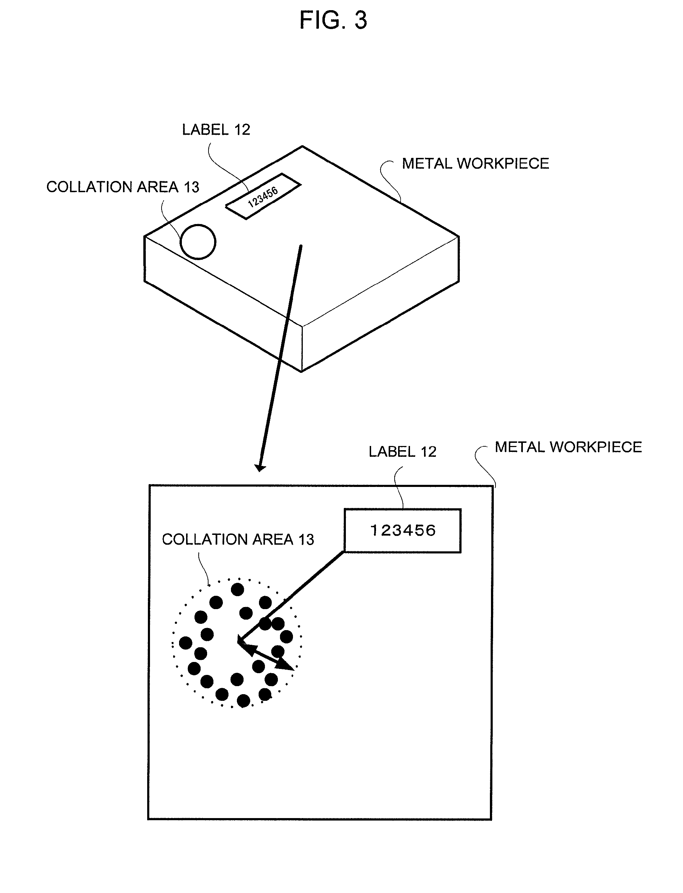

FIG. 3 illustrates another example. In FIG. 3, a label 12 attached to a metal workpiece is set to the reference section. For example, the metal workpiece is subjected to press working, and an inside of the recessed portion (i.e., a portion lower than the adjacent portion resulted from the press working) is set to a collation area 13 existing at a standard position relative to the label 12. In FIG. 3, also, since the label 12 is commonly attached to every product, it is easy to detect the label 12. Also, even if the collation area 13 is positioned away from the label 12, only with the detection of the label 12, the collation area 13 positioned relative to the position of the label 12 can also be detected. For example, referring to a lower left top of the label 12 as a reference point, a position X mm away from the lower left top downwardly by 45 degrees is defined as a center of the collation area 13. The position and a size of the collation area 13 may be defined and stored in advance in such a manner that a circular area having a radius of r mm from the center is set to the collation area 13.

Further, the image feature of the registered product may be stored after the image feature of the registered product is associated with manufacturing information including a factory name, a producer name, a lot number, a production date, and quality information, and management information including a shipping point, a ship date, and distribution information of the product. This enables acquisition of also management information of the collated product. Thus, this also enables distribution management and quality control of the product.

The imaging unit 4 and the to-be-collated product feature extraction unit 5 belong to a person who performs collation of the product, e.g., a retailer, a distribution manager, and a consumer and are configured similarly to the imaging unit 1 and the product feature extraction unit 2, respectively.

A collation/retrieval unit 6 collates the image feature of the collation area of the product to be collated, extracted by the to-be-collated product feature extraction unit 5, with the image feature of the registered collation area stored in the storage unit 3. As a result, if a matching point is found therebetween, the collation/retrieval unit 6 determines that the product to be collated is the registered product. Here, collation of the image feature is performed in the following manner. For example, considering an end point, an intersection point, and corners of the line of the surface pattern as the feature points, an arrangement of the feature points are collated. If the number of arrangements of the feature points of which positions are matched (i.e., within a range of a certain threshold) is equal to or more than a predetermined number, the collation/retrieval unit 6 considers it as the same product. Such collation technology can employ the known fingerprint matching technology.

As described above, according to this embodiment, a collation determination of the product can be performed without use of a specific tag. At the same time, distribution of the product duly delivered from the producer and/or the distributor of the product can be controlled. As a result, fraud on the product such as an evil replacement of the product can be eliminated or reduced.

Specifically, a portion having a pattern common to the products of the same kind is set to the reference section, and a portion or a whole of the recessed portion (i.e., the portion lower than the adjacent area) existing at the standard position relative to the reference section of the product is set to the collation area. A difference of the surface design in the collation area of the product is used in collation. This facilitates detection of the collation area. The recessed portion (i.e., the portion lower than the adjacent area), as the collation area, is more scratch-resistant and stain-resistant than the other portions, i.e., is advantageous in keeping a pattern, such as a surface design and minute unevenness within the area for collation/retrieval.

Further, if the manufacturing information including a production site, a factory name, a producer name, a lot number, a production date, and quality of the product, and the distribution information including a shipping point and a ship date of the product are associated with the image feature of the product in a corresponding manner to be stored, for example, the consumer is capable of also obtaining history information of the product.

Now, the management information retrieval system using the collation system according to the above described embodiment will be described below. The management information retrieval system of this embodiment is made to satisfy a demand for retrieving management information about a lot number of the product and a line number of the production site in the case where the system extracts a product from many products to perform a quality test of the product in a manner similar to the acceptance sampling of the factory.

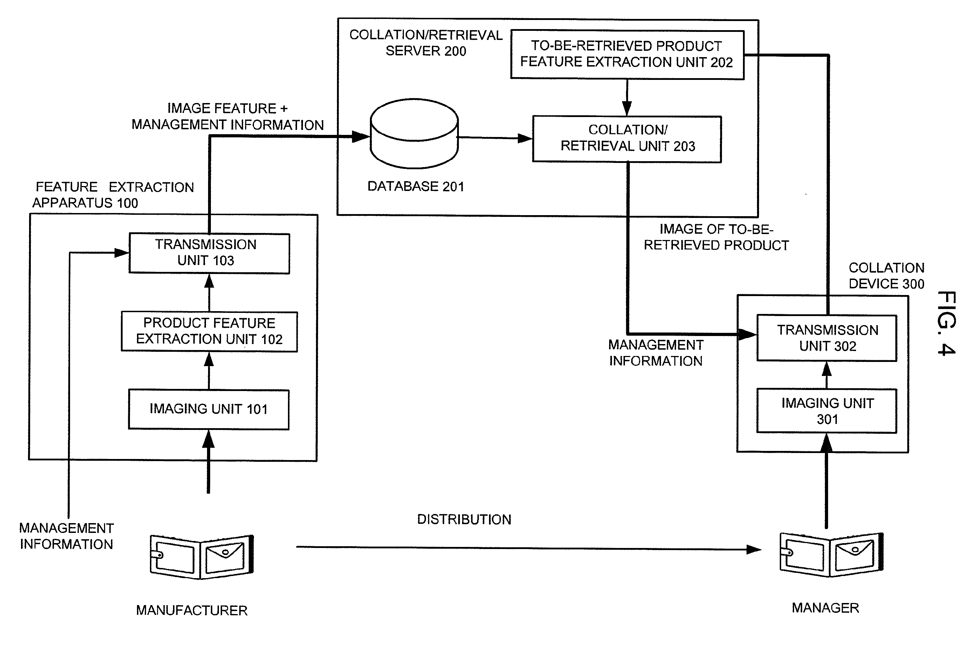

FIG. 4 is a block diagram illustrating the management information retrieval system.

As shown in FIG. 4, the management information retrieval system includes a feature extraction apparatus 100 belonging to a side of a leather wallet manufacturer, a collation/retrieval server 200 performing collation, and a collation device 300 belonging to a side of the quality control authority.

The image feature extraction apparatus 100 includes an imaging unit 101, a product feature extraction unit 102, and a transmission unit 103. The imaging unit 101 and the product feature extraction unit 102 are configured similarly to the above described imaging unit 1 and the product feature extraction unit 2, respectively. The transmission unit 103 transmits the image feature of the collation area of the wallet extracted by the product feature extraction unit 102 and the management information (including a production site, a producer name, a lot number, a production date, and quality information) for the collation thereof.

A collation server 200 includes a database 201, a to-be-retrieved product feature extraction unit 202, and a collation/retrieval unit 203. The to-be-retrieved product feature extraction unit 202 and the collation/retrieval unit 203 are configured similarly to the above described to-be-collated product feature extraction unit 5 and the collation/retrieval unit 6, respectively. The database 201 stores the image feature of the collation area of each wallet of the products transmitted from the image feature extraction apparatus 100 belonging to the side of the producer after the image feature is associated with the management information of the wallet.

A collation device 300 includes an imaging unit 301 and a transmission and reception unit 302. The imaging unit 301 is configured similarly to the above described imaging unit 4. The transmission unit 302 transmits an image of the wallet captured by the imaging unit 301 to the collation server 200. Also, the transmission unit 302 receives a retrieval result from the collation server 200.

Now, an operation of the above described configuration will be described below.

First, a registration operation of the image feature of the surface design in the collation area of the wallet will be described.

The producer registers in advance, while the portion marked and thus recessed (i.e., that is lowered more than the adjacent area) on the logotype 10 is set to the collation area, the image feature of the logotype 10 marked on the wallet as illustrated in FIG. 2 and the position of the collation area in the product feature extraction unit 102.

Next, an imaging unit 101 captures an image of the surface of the wallet including the logotype 10 and the collation area determined with reference to the logotype 10.

The product feature extraction unit 102 detects the logotype 10 from the captured image of the wallet and extracts the image feature of the surface design of the recessed portion in the collation area determined with reference to the detected logotype 10. At this time, the product feature extraction unit 102 normalizes the collation area determined with reference to the logotype 10 based on the position and the posture of the logotype 10 on the image to extract the image feature of the normalized collation area.

The producer inputs the management information (e.g., information about a production site, a producer name, a lot number, a production date, and quality information) of the wallet thus captured into the image feature extraction apparatus 100. Then, the transmission unit 103 transmits the image feature of the wallet and the management information of the wallet to the collation server 200. This processing is repeated for the number of products the producer desires to register.

In the collation server 200, the image feature of the wallet and the management information of the wallet from the image feature extraction apparatus 100 belonging to the producer are registered in the database 201.

Now, an operation of the retrieval processing will be described below.

An administrator captures an image of the surface design of the wallet corresponding to the collation area including the logotype 10 by the imaging unit 301 of the collation device 300 in order to perform collation of a wallet to be collated. The captured image is transmitted to the collation server 200 by the transmission and reception unit 302.

A to-be-retrieved product feature extraction apparatus 202 of the collation server 200 detects the logotype 10 of the wallet to be retrieved from the received image by a method similar to the above described one to extract an image feature of the surface design of the collation area from the detected logotype 10. Then, the to-be-retrieved product feature extraction apparatus 202 outputs the extracted image feature to the collation/retrieval unit 203.

In the collation/retrieval unit 203, an image feature having the highest similarity to the received image feature of the product to be retrieved is retrieved from the image features registered in the database 201. Then, the collation/retrieval unit 203 reads out the management information associated with the image feature to transmit the same to the collation device 300. Here, the collation/retrieval unit 203 is not configured such that the image feature having the similarity more than a predetermined threshold is retrieved in order to perform the collation such as the authenticity determination, but is configured such that the image feature having the highest similarity to the image feature of the product to be retrieved is retrieved from the image features registered in the database 201. This is because, during the quality test, a fake product is least likely to be contaminated. In other words, the authenticity determination processing that strictly checks the possible fake product against a genuine product is not needed here.

The collation device 300 receives the management information from the collation server 200 and notifies the received management information to the administrator.

According to this embodiment, as described above, even without specific equipment, the administrator can retrieve the management information of a specific product among a lot of products.

Meanwhile, in the above described embodiment, the product feature extraction unit 102 initially extracting the image feature of the product has been illustrated as being disposed on the device belonging to the producer. It is also possible for the to-be-retrieved product feature extraction unit 202 of the collation server 200 to share the roll. In this case, the image of the collation area of the product is transmitted from the side of the producer.

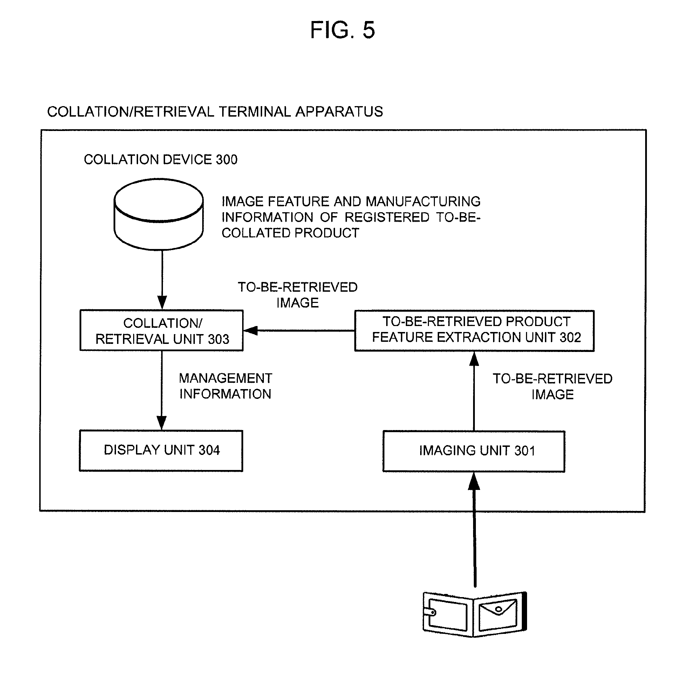

Further, the above described embodiment has been illustrated as performing the retrieval processing by the collation server 200 from the side of the administrator via communication. It is also possible to down load in advance features and management information of the surface design of the leather product from a database, e.g., the database 201 registering the image feature of the surface design and management information of the leather product, to perform the retrieval processing without using the communication. Such management information retrieval apparatus includes, as shown in FIG. 5, a storage unit 300 storing the image feature of the surface design and the management information of the registered leather product registered by, for example, the producer, the imaging unit 301, the to-be-retrieved product feature extraction unit 302, a collation/retrieval unit 303, and a display unit 304. The imaging unit 301, the to-be-retrieved product feature extraction unit 302, and the collation/retrieval unit 303 are configured similarly to the above described imaging unit, the to-be-retrieved product feature extraction unit, and the collation/retrieval unit, respectively. The display unit 304 displays, for example, the management information of the collation/retrieval unit 303.

As it is obvious from the above description, it is also possible that the feature extraction apparatus and the collation/retrieval unit include hardware. Alternatively, it is also possible that the feature extraction apparatus and the collation/retrieval unit include computer program. In this case, a processor executed by a program stored in a program memory executes a function and an operation similar to those of the above described embodiment and examples.

The above described embodiment may be partially or entirely described as in the below described Supplementary note. This, however, should not be construed in a limiting sense.

### (Supplementary note 1)

A collation/retrieval system including,
a first imaging means capturing, while a predetermined section formed into the same pattern for every product is set to a reference section, an image of a product including at least the reference section,
a product feature extraction means detecting from the image captured by the first imaging means the reference section of the product, setting a recessed portion existing at a standard position relative to the detected reference section of the product to a collation area, and thereby extracting an image feature in the collation area of the product,
a storage means storing the extracted image feature of the collation area of the product,
a second imaging means capturing an image including at least the reference section of a product to be collated,
a to-be-collated product feature extraction means detecting from the image captured by the second imaging means the reference section of the product to be collated and extracting an image feature of the collation area of the detected reference section, and
a collation/retrieval means collating the stored image feature with the image feature of the collation area of the product to be collated.

### (Supplementary note 2)

The collation/retrieval system according to Supplementary note 1,
wherein the reference section is at least any one of a trademark, a logotype, a name of manufacturer, a manufacturing company, a brand name, a product name, a product number, and a section marked, branded, pressed, or attached on/to the product.

### (Supplementary note 3)

The collation/retrieval system according to Supplementary note 1 or 2,
wherein the collation area is a recessed portion of the reference section.

### (Supplementary note 4)

The collation/retrieval system according to any one of Supplementary notes 1 to 3,
wherein the image feature is at least any one of a scratch naturally generated in the course of manufacturing/processing the product, minute unevenness, and a design pattern, which are different for each individual, in the collation area of the product.

### (Supplementary note 5)

The collation/retrieval system according to any one of Supplementary notes 1 to 4,
wherein the product feature extraction means and the to-be-collated product feature extraction means each store in advance the feature of the reference section and the position of the collation area, detect the reference section of the product from the image captured based on the feature of the reference section, and normalize the position and a size of the collation area from the detected reference section to extract the image feature of the collation area.

### (Supplementary note 6)

The collation/retrieval system according to any one of Supplementary notes 1 to 5,
wherein the storage means stores a plurality of image features of collation areas extracted from a plurality of products to be retrieved and management information corresponding to the plurality of products to be retrieved in a mutually associated manner; and
wherein the collation/retrieval means retrieves an image feature having the highest similarity to the image feature of the collation area of the product to be collated from the stored plurality of image features to output management information of a product corresponding to the image feature having the highest similarity.

### (Supplementary note 7)

The collation/retrieval system according to any one of Supplementary notes 1 to 6,
wherein the product is a leather product, a metal workpiece, a wood product, a molten resin, or an industrial product including a ceramic portion.

### (Supplementary note 8)

A collation/retrieval server collating a product produced by or delivered from a producer or a distributor with a product to be collated for retrieval including,
a storage means storing, while a predetermined section formed into the same pattern for every product is set to a reference section and a recessed portion existing at a standard position relative to the reference section of the product is set to a collation area, an image feature in the collation area of the product,
a to-be-collated product feature extraction means receiving an image of a product to be collated, detecting from the received image the reference section of the product to be collated, and thereby extracting an image feature of the collation area of the reference section, and
a collation/retrieval means collating the stored image feature with the image feature of the collation area of the product to be collated.

### (Supplementary note 9)

The collation/retrieval server according to Supplementary note 8, further including
a product feature extraction means receiving an image of a product produced by or delivered from a producer or a distributor, detecting from the received image the reference section of the product, extracting an image feature of the collation area of the detected reference section, and registering the extracted image feature of the collation area in the storage means.

### (Supplementary note 10)

The collation/retrieval server according to Supplementary notes 8 or 9,
wherein the reference section is at least any one of a trademark, a logotype, a name of manufacturer, a manufacturing company, a brand name, a product name, a product number, and a section marked, branded, pressed, or attached on/to the product.

### (Supplementary note 11)

The collation/retrieval server according to any one of Supplementary notes 8 to 10,
wherein the collation area is a recessed portion of the reference section.

### (Supplementary note 12)

The collation/retrieval server according to any one of Supplementary notes 8 to 11,
wherein the image feature is at least any one of a scratch naturally generated in the course of manufacturing/processing the product, minute unevenness, and a design pattern, which are different for each individual, in the collation area of the product.

### (Supplementary note 13)

The collation/retrieval server according to any one of Supplementary notes 8 to 12,
wherein the product feature extraction means or the to-be-collated product feature extraction means stores in advance the feature of the reference section and the position of the collation area, detects the reference section of the product from the image captured based on the feature of the reference section, and normalizes the position and a size of the collation area from the detected reference section to thereby extract the image feature of the collation area.

### (Supplementary note 14)

The collation/retrieval server according to any one of Supplementary notes 8 to 13,
wherein the storage means stores a plurality of image features of collation areas extracted from a plurality of products to be retrieved and management information corresponding to the plurality of products to be retrieved in a mutually associated manner; and
wherein the collation/retrieval means retrieves an image feature having the highest similarity to the image feature of the collation area of the product to be collated from the stored plurality of image features to output management information of a product corresponding to the image feature having the highest similarity.

### (Supplementary note 15)

The collation/retrieval server according to any one of Supplementary notes 8 to 14,
wherein the product is a leather product, a metal workpiece, a wood product, a molten resin, or an industrial product including a ceramic portion.

### (Supplementary note 16)

An image feature extraction apparatus including,
a feature extraction means receiving an image of a product to be collated, detecting from the received image a predetermined section defined in the product as a reference section, and thereby extracting an image feature of a recessed portion, as a collation area, existing at a standard position relative to the detected reference section of the product.

### (Supplementary note 17)

A collation/retrieval method including
setting a predetermined section formed into the same pattern for every product to a reference section,
setting a recessed portion existing at a standard position relative to the reference section to a collation area, and
using an image feature in the collation area of the product for collation/retrieval.

### (Supplementary note 18)

The collation/retrieval method according to Supplementary note 17, further including
capturing, while the predetermined section formed into the same pattern for every product is set to the reference section, an image of the product including at least the reference section,
detecting from the captured image the reference section of the product to extract, while the recessed portion existing at the standard position relative to the detected reference section is set to the collation area, an image feature in the collation area of the product,
storing the extracted image feature of the collation area of the product,
capturing an image including at least the reference section of a product to be collated,
detecting from the captured image to be collated the reference section of the product to be collated andextracting an image feature of the collation area of the detected reference section, and
collating the stored image feature with the image feature of the collation area of the product to be collated.

### (Supplementary note 19)

The collation/retrieval method according to Supplementary notes 17 or 18,
wherein the reference section includes at least a trademark, a logotype, a name of manufacturer, a manufacturing company, a brand name, a product name, and a product number marked, branded, pressed, or attached on/to the product.

### (Supplementary note 20)

The collation/retrieval method according to any one of Supplementary notes 17 to 19,
wherein the collation area is the recessed portion of the reference section.

### (Supplementary note 21)

The collation/retrieval method according to any one of Supplementary notes 17 to 20,
wherein the image feature is at least any one of a scratch naturally generated in the course of manufacturing/processing the product, minute unevenness, and a design pattern, which are different for each individual, in the collation area of the product.

### (Supplementary note 22)

The collation/retrieval method according to any one of Supplementary notes 17 to 21, further including
storing in advance a feature of the reference section and the position of the collation area,
detecting the reference section of the product from the image captured based on the feature of the reference section, and
normalizing the position and a size of the collation area from the detected reference section to extract the image feature of the collation area.

### (Supplementary note 23)

The collation/retrieval method according to any one of Supplementary notes 17 to 22 further includes
storing a plurality of image features of collation areas extracted from a plurality of products to be retrieved and management information corresponding to the plurality of products to be retrieved in a mutually associated manner, and
retrieving an image feature having the highest similarity to the image feature of the collation area of the product to be collated from the stored plurality of image features to output management information of a product corresponding to the image feature having the highest similarity.

### (Supplementary note 24)

The collation/retrieval method according to any one of Supplementary notes 17 to 23,
wherein the product is a leather product, a metal workpiece, a molten resin, or an industrial product including a ceramic portion.

### (Supplementary note 25)

A program causing a computer to receive an image of a product to be collated, detect from the received image a predetermined section formed into the same pattern for every product as a reference section, and extract an image feature of a recessed portion, as a collation area, existing at a standard position relative to the reference section of the product.

### (Supplementary note 26)

A collating/retrieving apparatus collating a product produced by or delivered from a producer or a distributor with a product to be collated for retrieval, including a to-be-collated product feature extraction means receiving an image of a product to be collated, detecting from the received image a reference section of the product to be collated, and thereby extracting an image feature of the collation area of the reference section, and
a collation/retrieval means collating, while a predetermined section formed into the same pattern for every product is set to a reference section and a recessed portion existing at a standard position relative to the reference section of the product is set to a collation area, an image feature stored in a storage means storing the image feature in the collation area of the product with an image feature of the collation area of the product to be collated.

Hereinabove, the present invention has been illustrated by preferred embodiments and examples. It is noted that the present invention is not limited to the above described embodiments and examples, and various modifications are possible without departing from the technical scope of the present disclosure.

This application claims the benefit of Japanese Patent Application No. 2011-166790 filed July 29, 2011, the disclosure of which is hereby incorporated by reference.

### [Description of the Reference Numeral

- 1: Imaging unit
- 2: Product feature extraction unit
- 3: Storage unit
- 4: Imaging unit
- 5: To-be-collated product feature extraction unit
- 6: Collation/retrieval unit

## Claims

1. A collation/retrieval system comprising:
a first imaging means capturing, while a predetermined section formed into the same pattern for every product is set to a reference section, an image of a product including at least the reference section;
a product feature extraction means detecting from the image captured by the first imaging means the reference section of the product, setting a recessed portion existing at a standard position relative to the detected reference section of the product to a collation area, and thereby extracting an image feature in the collation area of the product;
a storage means storing the extracted image feature of the collation area of the product;
a second imaging means capturing an image including at least the reference section of a product to be collated;
a to-be-collated product feature extraction means detecting from the image captured by the second imaging means the reference section of the product to be collated and extracting an image feature of the collation area of the detected reference section; and
a collation/retrieval means collating the stored image feature with the image feature of the collation area of the product to be collated.

2. The collation/retrieval system according to claim 1, wherein the reference section is at least any one of a trademark, a logotype, a name of manufacturer, a manufacturing company, a brand name, a product name, a product number, and a section marked, branded, pressed, or attached on/to the product.

3. The collation/retrieval system according to claim 1 or 2, wherein the collation area is a recessed portion of the reference section.

4. The collation/retrieval system according to any one of claims 1 to 3, wherein the image feature is at least any one of a scratch naturally generated in the course of manufacturing/processing the product, minute unevenness, and a design pattern, which are different for each individual, in the collation area of the product.

5. The collation/retrieval system according to any one of claims 1 to 4, wherein the product feature extraction means and the to-be-collated product feature extraction means each store in advance the feature of the reference section and the position of the collation area, detect the reference section of the product from the image captured based on the feature of the reference section, and normalize the position and a size of the collation area from the detected reference section to extract the image feature of the collation area.

6. The collation/retrieval system according to any one of claims 1 to 5,
wherein the storage means stores a plurality of image features of collation areas extracted from a plurality of products to be retrieved and management information corresponding to the plurality of products to be retrieved in a mutually associated manner; and
wherein the collation/retrieval means retrieves an image feature having the highest similarity to the image feature of the collation area of the product to be collated from the stored plurality of image features to output management information of a product corresponding to the image feature having the highest similarity.

7. The collation/retrieval system according to any one of claims 1 to 6, wherein the product is a leather product, a metal workpiece, a wood product, a molten resin, or an industrial product including a ceramic portion.

8. A collation/retrieval server collating a product produced by or delivered from a producer or a distributor with a product to be collated for retrieval, comprising:
a storage means storing, while a predetermined section formed into the same pattern for every product is set to a reference section and a recessed portion existing at a standard position relative to the reference section of the product is set to a collation area, an image feature in the collation area of the product;
a to-be-collated product feature extraction means receiving an image of a product to be collated, detecting from the received image the reference section of the product to be collated, and thereby extracting an image feature of the collation area of the reference section; and
a collation/retrieval means collating the stored image feature with the image feature of the collation area of the product to be collated.

9. The collation/retrieval server according to claim 8, further comprising:
a product feature extraction means receiving an image of a product produced by or delivered from a producer or a distributor, detecting from the received image the reference section of the product, extracting an image feature of the collation area of the detected reference section, and registering the extracted image feature of the collation area in the storage means.

10. The collation/retrieval server according to claim 8 or 9, wherein the reference section is at least any one of a trademark, a logotype, a name of manufacturer, a manufacturing company, a brand name, a product name, a product number, and a section marked, branded, pressed, or attached on/to the product.

11. The collation/retrieval server according to any one of claims 8 to 10, wherein the collation area is the recessed portion of the reference section.

12. The collation/retrieval server according to any one of claims 8 to 11, wherein the image feature is at least any one of a scratch naturally generated in the course of manufacturing/processing the product, minute unevenness, and a design pattern, which are different for each individual, in the collation area of the product.

13. The collation/retrieval server according to any one of claims 8 to 12, wherein the product feature extraction means or the to-be-collated product feature extraction means stores in advance the feature of the reference section and the position of the collation area, detects the reference section of the product from the image captured based on the feature of the reference section, and normalizes the position and a size of the collation area from the detected reference section to thereby extract the image feature of the collation area.

14. The collation/retrieval server according to any one of claims 8 to 13,
wherein the storage means stores a plurality of image features of collation areas extracted from a plurality of products to be retrieved and management information corresponding to the plurality of products to be retrieved in a mutually associated manner; and
wherein the collation/retrieval means retrieves an image feature having the highest similarity to the image feature of the collation area of the product to be collated from the stored plurality of image features to output management information of a product corresponding to the image feature having the highest similarity.

15. The collation/retrieval server according to any one of claims 8 to 14, wherein the product is a leather product, a metal workpiece, a wood product, a molten resin, or an industrial product including a ceramic portion.

16. An image feature extraction apparatus comprising:
a feature extraction means receiving an image of a product to be collated, detecting from the received image a predetermined section defined in the product as a reference section, and thereby extracting an image feature of a recessed portion, as a collation area, existing at a standard position relative to the detected reference section of the product.

17. A collation/retrieval method comprising:
setting a predetermined section formed into the same pattern for every product to a reference section;
setting a recessed portion existing at a standard position relative to the reference section to a collation area; and
using an image feature in the collation area of the product for collation/retrieval.

18. The collation/retrieval method according to claim 17, further comprising:
capturing, while the predetermined section formed into the same pattern for every product is set to the reference section, an image of the product including at least the reference section;
detecting from the captured image the reference section of the product to extract, while the recessed portion existing at the standard position relative to the detected reference section is set to the collation area, an image feature in the collation area of the product;
storing the extracted image feature of the collation area of the product;
capturing an image including at least the reference section of a product to be collated;
detecting from the captured image to be collated the reference section of the product to be collated and extracting an image feature of the collation area of the detected reference section; and
collating the stored image feature with the image feature of the collation area of the product to be collated.

19. The collation/retrieval method according to claim 17 or 18, wherein the reference section is at least a trademark, a logotype, a name of manufacturer, a manufacturing company, a brand name, a product name, and a product number marked, branded, pressed, or attached on/to the product.

20. The collation/retrieval method according to any one of claims 17 to 19, wherein the collation area is the recessed portion of the reference section.

21. The collation/retrieval method according to any one of claims 17 to 20, wherein the image feature is at least any one of a scratch naturally generated in the course of manufacturing/processing the product, minute unevenness, and a design pattern, which are different for each individual, in the collation area of the product.

22. The collation/retrieval method according to any one of claims 17 to 21, further comprising:
storing in advance a feature of the reference section and the position of the collation area;
detecting the reference section of the product from the image captured based on the feature of the reference section; and
normalizing the position and a size of the collation area from the detected reference section to extract the image feature of the collation area.

23. The collation/retrieval method according to any one of claims 17 to 22 further comprising:
storing a plurality of image features of collation areas extracted from a plurality of products to be retrieved and management information corresponding to the plurality of products to be retrieved in a mutually associated manner; and
retrieving an image feature having the highest similarity to the image feature of the collation area of the product to be collated from the stored plurality of image features to output management information of a product corresponding to the image feature having the highest similarity.

24. The collation/retrieval method according to any one of claims 17 to 23, wherein the product is a leather product, a metal workpiece, a molten resin, or an industrial product including a ceramic portion.

25. A program causing a computer to receive an image of a product to be collated, detect from the received image a predetermined section formed into the same pattern for every product as a reference section, and extract an image feature of a recessed portion, as a collation area, existing at a standard position relative to the reference section of the product.

26. A collating/retrieving apparatus collating a product produced by or delivered from a producer or a distributor with a product to be collated for retrieval, comprising:
a to-be-collated product feature extraction means receiving an image of a product to be collated, detecting from the received image a reference section of the product to be collated, and thereby extracting an image feature of the collation area of the reference section; and
a collation/retrieval means collating, while a predetermined section formed into the same pattern for every product is set to a reference section and a recessed portion existing at a standard position relative to the reference section of the product is set to a collation area, an image feature stored in the storage means storing the image feature in the collation area of the product with an image feature of the collation area of the product to be collated.
